# EUROPEAN PATENT APPLICATION

(11) **EP 4 063 031 A1**
(43) Date of publication of application: **28.09.2022**
(21) Application number: 20890777.4
(22) Date of filing: 15.10.2020
(51) Int. Cl.: B07C 5/342, B65G 11/00

(54) **OPTICAL SORTER**

(30) Priority: 20.11.2019 JP 2019209821
(71) Applicant: Satake Corporation, Chiyoda-ku Tokyo 101-0021 (JP)
(72) Inventor: MIYAMOTO, Tomoyuki, Tokyo 101-0021 (JP)
(74) Representative: Haseltine Lake Kempner LLP
(86) International application number: PCT/JP2020/038906
(87) International publication number: WO 2021/100372

(57) **Abstract**

To provide an optical sorter that can detect defective granular matters, foreign matters, and the like among objects to be sorted with high accuracy, and improve sorting performance. Provided is an optical sorter including a chute arranged in an inclined manner such that objects to be sorted flow down, an optical detecting unit configured to detect the objects to be sorted at a detection position, and an ejector unit configured to sort and remove the objects to be sorted based on a result of detection obtained by the optical detecting unit. The optical detecting unit includes an illuminating unit configured to illuminate the detection position, and an imaging unit configured to image the objects to be sorted at the detection position. The chute is provided with an optical detection slit orthogonally crossing a flowing down direction of the objects to be sorted. The optical detecting unit images the objects to be sorted flowing down on the chute with the imaging unit using a position at which the optical detection slit is provided as the detection position.

## Description

### [Technical Field]

The present invention relates to an optical sorter that sorts granular matters such as cereal grains or resin pellets based on the color or the like.

### [Background Art]

Conventionally-known optical sorters sort a raw material composed of cereal grains such as rice or wheat, resin pellets, coffee beans, or other granular matters into non-defective granular matters and defective granular matters based on the color or the like, and remove foreign matters mixed in the raw material based on the color or the like (see Patent Literature 1 and Patent Literature 2).

The optical sorters described in Patent Literature 1 and Patent Literature 2 each include an inclined chute, and irradiate granular matters falling down from the lower end of the chute while drawing a certain trajectory with light from a light source. The optical sorters each receive reflected light or transmitted light from granular matters with a sensor to detect defective granular matters, foreign matters, and the like. The optical sorters each sort non-defective granular matters and defective granular matters by blowing off the detected defective granular matters, foreign matters, and the like with an ejector.

In the optical sorters, some of the granular matters falling down from the lower end of the chute deviate from a certain falling trajectory depending on a difference in shape or size, a difference in flying attitude in the air, or the like. In this case, a problem arises in that the optical sorters are unable to detect defective granular matters, foreign matters, and the like with high accuracy, which affects sorting performance.

### [Citation List]

### [Patent Literature]

[Patent Literature 1] Japanese Patent Laid-Open No. 8-252535
[Patent Literature 2] Japanese Patent Laid-Open No. 2009-50760

### [Summary of Invention]

### [Technical Problem]

It is therefore an objective of the present invention to provide an optical sorter that can detect defective granular matters, foreign matters, and the like among objects to be sorted with high accuracy, and improve sorting performance.

### [Solution to Problem]

In order to achieve the above objective, one embodiment of the present invention is an optical sorter including a chute arranged in an inclined manner such that objects to be sorted flow down, an optical detecting unit configured to detect the objects to be sorted at a detection position, and an ejector unit configured to sort and remove the objects to be sorted based on a result of detection obtained by the optical detecting unit. The optical detecting unit includes an illuminating unit configured to illuminate the detection position, and an imaging unit configured to image the objects to be sorted at the detection position. The chute is provided with an optical detection slit orthogonally crossing a flowing down direction of the objects to be sorted. The optical detecting unit images the objects to be sorted flowing down on the chute with the imaging unit using a position at which the optical detection slit is provided as the detection position.

In one embodiment of the present invention, preferably, a pair of the optical detecting units are provided on an upper surface side and a lower surface side of the chute, and image the objects to be sorted flowing down on the chute from the upper surface side and the lower surface side of the chute.

In one embodiment of the present invention, preferably, the chute is provided with a sorting and removal slit orthogonally crossing the flowing down direction of the objects to be sorted on a downstream side of the optical detection slit, and the ejector unit sorts and removes the objects to be sorted flowing down on the chute to the upper surface side or the lower surface side of the chute via the sorting and removal slit.

In one embodiment of the present invention, preferably, the ejector unit is provided on the lower surface side of the chute, and removes the objects to be sorted flowing down on the chute by ejecting air to the upper surface side of the chute or by suction to the lower surface side of the chute via the sorting and removal slit.

In one embodiment of the present invention, preferably, the ejector unit is provided on the upper surface side of the chute, and removes the objects to be sorted flowing down on the chute by suction to the upper surface side of the chute or by ejecting air to the lower surface side of the chute via the sorting and removal slit.

In one embodiment of the present invention, preferably, the optical sorter further includes a discharge hopper configured to individually discharge the objects to be sorted having been sorted by the ejector unit. The chute is located with a lower end of the chute extended into a first discharge part of the discharge hopper, and the sorting and removal slit is arranged to be located above the first discharge part. The ejector unit sorts and removes the objects to be sorted flowing down on the chute to a second discharge part of the discharge hopper via the sorting and removal slit.

In one embodiment of the present invention, preferably, the ejector unit is provided at a position opposite to a falling trajectory of the objects to be sorted falling down from the lower end of the chute, and sorts and removes, from the falling trajectory, the objects to be sorted falling down from the lower end of the chute.

In one embodiment of the present invention, preferably, the ejector unit is provided at a position adjacent to the lower end of the chute, and sorts and removes the objects to be sorted falling down from the lower end of the chute to the upper surface side or the lower surface side of the chute.

In one embodiment of the present invention, preferably, the ejector unit is provided on the lower surface side of the chute, and removes the objects to be sorted falling down from the lower end of the chute by ejecting air to the upper surface side of the chute or by suction to the lower surface side of the chute.

In one embodiment of the present invention, preferably, the ejector unit is provided on the upper surface side of the chute, and removes the objects to be sorted falling down from the lower end of the chute by suction to the upper surface side of the chute or by ejecting air to the lower surface side of the chute.

In one embodiment of the present invention, preferably, the imaging unit includes a line sensor.

In one embodiment of the present invention, preferably, the illuminating unit is an LED light source.

### [Advantageous Effects of Invention]

In the optical sorter of one embodiment of the present invention, the chute is provided with an optical detection slit orthogonally crossing the flowing down direction of the objects to be sorted. In addition, the optical detecting unit images the objects to be sorted flowing down on the chute with the imaging unit using a position at which the optical detection slit is provided as the detection position. Thus, the objects to be sorted flowing down on the chute along a certain trajectory all the time can be detected unlike a case of detecting objects to be sorted while falling down from the lower end of the chute as in conventional optical sorters.

The width of the optical detection slit 31 provided on the chute 3 can be set considering the size of a sensor element, the amount of light received by a sensor, the inclination angle of the chute, the weight and size of granular matters flowing down on the chute, and the like. In a case of rice grains, for example, the width of the optical detection slit 31 can be set from 1 to 2 mm.

In the optical sorter of one embodiment of the present invention, the chute is provided with a sorting and removal slit orthogonally crossing the flowing down direction of the objects to be sorted on a downstream side of the optical detection slit. In addition, the ejector unit sorts and removes the objects to be sorted flowing down on the chute to the upper surface side or the lower surface side of the chute via the sorting and removal slit. Thus, the objects to be sorted flowing down on the chute along a certain trajectory all the time can be sorted and removed unlike the case of sorting and removing objects to be sorted while falling down from the lower end of the chute as in the conventional optical sorters.

Therefore, according to the optical sorter of the one embodiment of the present invention, defective granular matters, foreign matters, and the like among objects to be sorted can be sorted and removed with higher accuracy than in the conventional optical sorters. As a result, sorting performance is further improved.

In the optical sorter of one embodiment of the present invention, the chute is located with a lower end of the chute extended into the first discharge part of the discharge hopper. In addition, the sorting and removal slit is arranged to be located above the first discharge part. In addition, the ejector unit sorts and removes the objects to be sorted flowing down on the chute to the second discharge part of the discharge hopper via the sorting and removal slit. Thus, the objects to be sorted can be assorted and discharged easily and reliably to the first discharge part and the second discharge part of the discharge hopper.

In the optical sorter of one embodiment of the present invention, the ejector unit is provided at a position opposite to the falling trajectory of the objects to be sorted falling down from the lower end of the chute. The ejector unit sorts and removes, from the falling trajectory, the objects to be sorted falling down from the lower end of the chute. Therefore, the falling trajectory of the objects to be sorted is less likely to fluctuate at a position at which sorting is performed by the ejector unit since the ejector unit can be disposed at a position in the vicinity of the lower end of the chute unlike the conventional optical sorters.

Therefore, according to the optical sorter of the present invention, defective granular matters, foreign matters, and the like among objects to be sorted can be sorted and removed with higher accuracy than in the conventional optical sorters, and sorting performance can thus be improved further.

In the optical sorter of one embodiment of the present invention, the ejector unit is provided at a position adjacent to the lower end of the chute, and sorts and removes the objects to be sorted falling down from the lower end of the chute to the upper surface side or the lower surface side of the chute. Thus, the falling trajectory of the objects to be sorted does not fluctuate at the position at which sorting is performed by the ejector unit unlike the conventional optical sorters.

Therefore, according to the optical sorter of the one embodiment of the present invention, defective granular matters, foreign matters, and the like among objects to be sorted can be sorted and removed with higher accuracy than in the conventional optical sorters, and sorting performance can thus be improved further.

In the optical sorter of one embodiment of the present invention, the imaging unit includes a line sensor, then the width of the optical detection slit can be reduced.

In the optical sorter of one embodiment of the present invention, the illuminating unit is an LED light source, then light is less likely to diffuse, and the amount of light at the detection position can be ensured sufficiently even if the width of the optical detection slit is small.

### [Brief Description of Drawings]

[Figure 1] Figure 1 is a schematic side cross-sectional view of an optical sorter.
[Figure 2] Figure 2 is a schematic explanatory diagram of an optical sorting unit in a first embodiment.
[Figure 3] Figure 3 is a schematic perspective view of a chute in the first embodiment.
[Figure 4] Figure 4 is an explanatory diagram of an example of sorting and removing defective granular matters with an ejector device in the optical sorting unit of the first embodiment.
[Figure 5] Figure 5 is an explanatory diagram of a modified example of the optical sorting unit of the first embodiment, which is another example of sorting and removing defective granular matters with the ejector device.
[Figure 6] Figure 6 is a schematic explanatory diagram of another modified example of the optical sorting unit of the first embodiment.
[Figure 7] Figure 7 is a schematic explanatory diagram of an optical sorting unit in a second embodiment.

### [Description of Embodiments]

Embodiments of the present invention will be described with reference to the drawings.

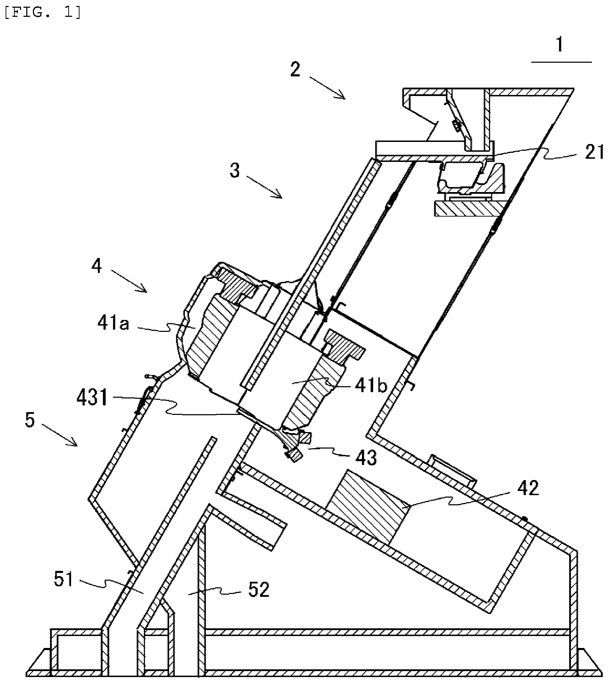

Figure 1 shows an example of an optical sorter and a schematic side cross-sectional view.

In the embodiments of the present invention, an optical sorter 1 includes a granular matter supply unit 2 that supplies granular matters as a raw material, a chute 3 arranged in an inclined manner to cause granular matters to flow down, an optical sorting unit 4 that detects the granular matters flowing down on the chute 3, and sorts the granular matters into non-defective granular matters and defective granular matters based on a result of the detection, and a discharge hopper 5 that discharges the granular matters sorted by the optical sorting unit 4 in a manner separated into non-defective granular matters and defective granular matters.

The granular matter supply unit 2 includes a raw material tank not shown, and a vibrating feeder 21 that supplies granular matters stored in the raw material tank to the chute 3.

The chute 3 has a predetermined width. The chute 3 is arranged in an inclined state at a position below the lower end side of the vibrating feeder 21. The chute 3 causes granular matters supplied from the vibrating feeder 21 to flow down by gravity.

The optical sorting unit 4 includes a pair of optical detecting devices 41a, 41b disposed on an upper surface side and a lower surface side of the chute 3, a determining device 42 that determines granular matters as non-defective granular matters or defective granular matters based on imaging signals of the optical detecting devices 41a, 41b, and an ejector device 43 that removes defective granular matters based on a result of determination obtained by the determining device 42 to sort the granular matters into non-defective granular matters and defective granular matters.

The discharge hopper 5 includes a non-defective granular matter discharge channel 51 and a defective granular matter discharge channel 52 that divide the granular matters sorted by the ejector device 43 into non-defective granular matters and defective granular matters, and discharge them.

In the optical sorter 1, the granular matters stored in the raw material tank of the granular matter supply unit 2 are supplied continuously to the chute 3 by the vibrating feeder 21. The granular matters supplied to the chute 3 continuously flow down by gravity on the surface of the chute 3 in a state spreading in the width direction.

The granular matters flowing down on the chute 3 are imaged with imaging units in the pair of optical detecting devices 41a, 41b in the optical sorting unit 4**.** The determining device 42 compares signal levels of the amount of light, color component, and the like in imaging signals of the imaging units with threshold values. The determining device 42 thereby determines granular matters as either non-defective granular matters or defective granular matters. Based on a removal signal sent from the determining device 42, defective granular matters are removed by air ejection in the ejector device 43. As a result, the granular matters are sorted into non-defective granular matters and defective granular matters.

Then, granular matters sorted as non-defective granular matters are discharged through the non-defective granular matter discharge channel 51 of the discharge hopper 5, and granular matters sorted as defective granular matters are discharged through the defective granular matter discharge channel 52 of the discharge hopper 5, respectively.

### [First embodiment]

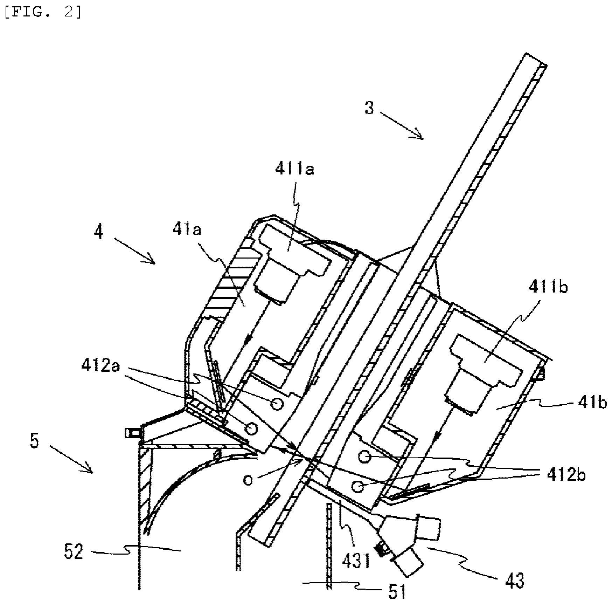

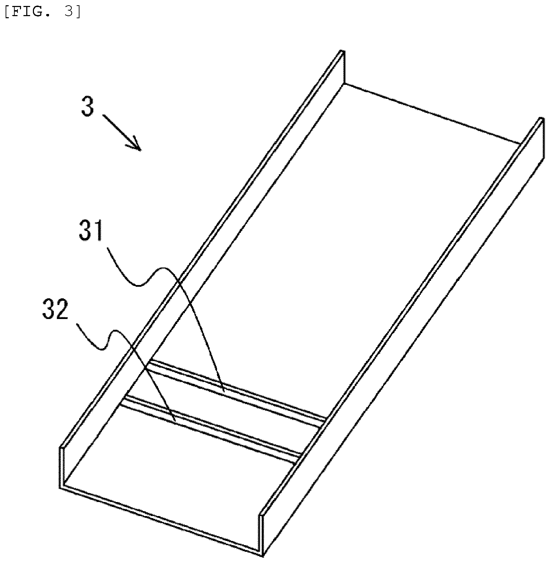

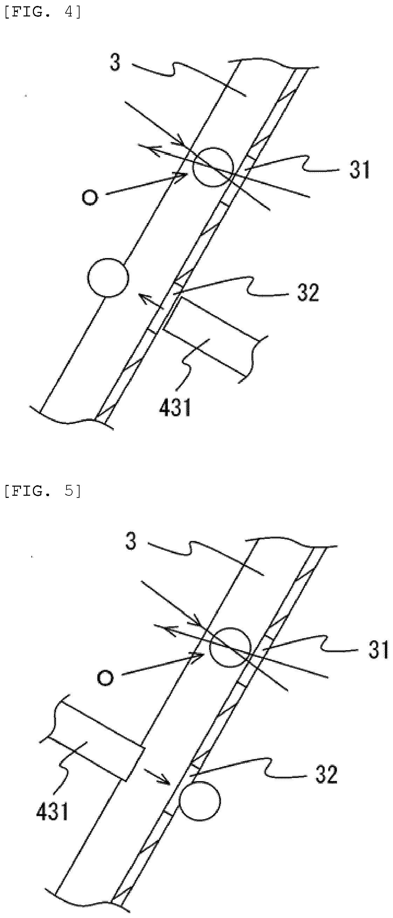

Figure 2 is a schematic explanatory diagram of the optical sorting unit in a first embodiment. Figure 3 is a schematic perspective view of the chute in the first embodiment. Figure 4 is an explanatory diagram of an example of sorting and removing defective granular matters with an ejector device in the optical sorting unit of the first embodiment.

In the optical sorting unit 4 in the first embodiment, the chute 3 is provided with an optical detection slit 31 that orthogonally crosses a flowing down direction of granular matters and is continuously open in the width direction of the chute 3.

The chute 3 is also provided with a sorting and removal slit 32 orthogonally crossing the flowing down direction of granular matters on a downstream side of the optical detection slit 31 and is continuously open in the width direction of the chute 3.

The chute 3 is located with its lower end extended into the non-defective granular matter discharge channel 51 of the discharge hopper 5. The sorting and removal slit 32 is disposed to be located above the non-defective granular matter discharge channel 51.

In the optical sorting unit 4, the optical detecting devices 41a, 41b include line sensors or area sensors such as CCD that can handle granular matters flowing down on the chute 3 in a state spreading in the width direction. The optical detecting devices 41a, 41b include imaging units 411a, 411b such as CCD cameras capable of receiving light of wavelength ranges of near infrared rays (NIR), visible light, ultraviolet light, and the like, illuminating units 412a, 412b such as LED light sources or fluorescent lights that illuminate a detection position O on the chute 3 along which granular matters flow down, and a background part that serves as a background when imaging the granular matters with the imaging units 411a, 411b at the detection position O.

In addition, the ejector device 43 can handle granular matters flowing down on the chute 3 in a state spreading in the width direction similarly to the optical detecting devices 41a, 41b. The ejector device 43 includes an ejector nozzle 431 that can selectively eject air through a plurality of nozzle holes formed in the width direction, and a not-shown ejector driving device that causes the ejector nozzle 431 to eject air based on the removal signal sent from the determining device.

The optical detecting devices 41a, 41b are disposed such that the position on the chute 3 at which the optical detection slit 31 is provided is the detection position O. The optical detecting devices 41a, 41b illuminate the granular matters flowing down on the chute 3 with the illuminating units 412a, 412b at the detection position 0 from the upper surface side and the lower surface side of the chute, and image the granular matters with the imaging units 411a, 411b.

In addition, the ejector device 43 is disposed such that the leading end of the ejector nozzle 431 abuts against or comes into proximity with the lower surface side of the chute 3, and the plurality of nozzle holes of the ejector nozzle 431 communicate with the sorting and removal slit 32 directly or indirectly. The ejector device 43 removes granular matters determined as defective granular matters among the granular matters flowing down on the chute 3 to the upper surface side of the chute 3 via the sorting and removal slit 32 by ejecting air.

Then, granular matters determined as non-defective granular matters among the granular matters flowing down on the chute 3 are discharged through the non-defective granular matter discharge channel 51 of the discharge hopper 5, and granular matters determined as defective granular matters are discharged through the defective granular matter discharge channel 52 of the discharge hopper 5.

Herein, the imaging units 411a, 411b may include line sensors or area sensors. If the imaging units 411a, 411b include line sensors, defective granular matters and the like can be detected with higher accuracy than in imaging units including area sensors even in the case in which the width of the optical detection slit 31 is reduced.

In addition, LED light sources, fluorescent lights, or the like may be used for the illuminating units 412a, 412b. If the LED light sources are used for the illuminating units 412a, 412b, light is less likely to diffuse because of the property of the LED light sources. Thus, when imaging the granular matters flowing down on the chute 3 with the imaging units 411a, 411b at the detection position O, a sufficient amount of light can be ensured even if the width of the optical detection slit 31 is small.

Note that, in a case of using fluorescent lights for the illuminating units 412a, 412b, an effect equivalent to that of the LED light sources can be obtained by collecting light.

The width of the optical detection slit 31 provided on the chute 3 can be set considering the size of a sensor element, the amount of light received by a sensor, the inclination angle of the chute, the weight and size of granular matters flowing down on the chute, and the like. In a case of rice grains, for example, the width of the optical detection slit 31 can be set at 1 to 2 mm.

In addition, the width of the sorting and removal slit 32 provided on the chute 3 can be set at such a width that defective granular matters among granular matters can be sorted and removed reliably.

The sorting and removal slit 32 is open continuously in the width direction of the chute 3, but may be open intermittently in the width direction of the chute 3 in correspondence with the plurality of nozzle holes of the ejector nozzle 431.

The chute 3 can be provided with a cover on its surface in order to prevent granular matters from bouncing. If the cover is provided on the surface of the chute 3, even granular matters such as beans that easily bounce can flow down on the chute 3 along a certain trajectory all the time.

In the example shown in Figure 4, the ejector device 43 is disposed such that the leading end of the ejector nozzle 431 abuts against or comes into proximity with the lower surface side of the chute 3, and defective granular matters flowing down on the chute 3 are removed to the upper surface side of the chute 3 by ejecting air. Alternatively, a suctioning device can also be used as the ejector device to suction and remove defective granular matters flowing down on the chute 3 to the lower surface side of the chute 3 via the sorting and removal slit 32.

Figure 5 is an explanatory diagram of a modified example of the optical sorting unit of the first embodiment, which is another example of sorting and removing defective granular matters with the ejector device.

In the example shown in Figure 4, the ejector device 43 has the ejector nozzle 431 disposed on the lower surface side of the chute 3. As shown in Figure 5, by disposing the ejector nozzle 431 at a height position on the upper surface side of the chute 3 so as not to interfere with granular matters flowing down on the chute 3, defective granular matters flowing down on the chute 3 can also be removed to the lower surface side of the chute 3 via the sorting and removal slit 32 by ejecting air. Alternatively, a suctioning device can also be used as the ejector device to suction and remove defective granular matters flowing down on the chute 3 to the upper surface side of the chute 3.

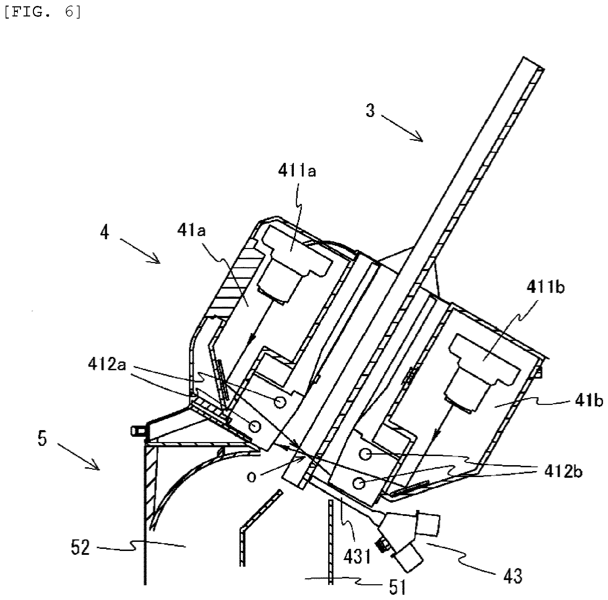

Figure 6 is a schematic explanatory diagram of another modified example of the optical sorting unit of the first embodiment.

In the example shown in Figure 2, in the optical sorting unit 4, the chute 3 is disposed such that its lower end is located to be extended into the non-defective granular matter discharge channel 51 of the discharge hopper 5. As shown in Figure 6, it is also possible to avoid the lower end of the chute 3 being extended into the non-defective granular matter discharge channel 51 of the discharge hopper 5.

Even in the case in which, in the optical sorting unit 4, the lower end of the chute 3 is not extended into the non-defective granular matter discharge channel 51 of the discharge hopper 5, granular matters determined as non-defective granular matters can be discharged through the non-defective granular matter discharge channel 51 of the discharge hopper 5, and granular matters determined as defective granular matters can be discharged through the defective granular matter discharge channel 52 of the discharge hopper 5, respectively.

In the embodiments of the present invention, in the optical sorter in the first embodiment, the chute 3 is provided with the optical detection slit 31 that orthogonally crosses the flowing down direction of granular matters and is continuously open in the width direction of the chute 3. In addition, the optical detecting devices 41a, 41b image the granular matters flowing down on the chute 3 with the imaging units 411a, 411b using the position at which the optical detection slit 31 is provided as the detection position O. Thus, granular matters flowing down on the chute 3 along a certain trajectory all the time can be detected unlike the case of detecting granular matters while falling down from the lower end of the chute as in the conventional optical sorters.

Therefore, according to the optical sorter in the first embodiment, defective granular matters among granular matters can be detected with higher accuracy than in the conventional optical sorters, and sorting performance can thus be improved.

In the embodiments of the present invention, in the optical sorter in the first embodiment, the chute 3 is provided with the sorting and removal slit 32 that orthogonally crosses the flowing down direction of granular matters on the downstream side of the optical detection slit 31 and is open continuously or intermittently in the width direction of the chute 3. In addition, the ejector device 43 sorts and removes granular matters flowing down on the chute 3 to the upper surface side or the lower surface side of the chute 3 via the sorting and removal slit 32. Thus, granular matters flowing down on the chute 3 along a certain trajectory all the time can be sorted and removed unlike the case of sorting and removing granular matters while falling down from the lower end of the chute as in the conventional optical sorters.

Therefore, according to the optical sorter in the first embodiment, defective granular matters among granular matters can be sorted and removed with higher accuracy than in the conventional optical sorters, and sorting performance can thus be improved further.

In addition, in an embodiment of the present invention, the optical sorter in the first embodiment sorts and removes granular matters flowing down on the chute 3 along a certain trajectory all the time unlike the case of sorting and removing granular matters while falling down from the lower end of the chute as in the conventional optical sorters. This eliminates the need to adjust the position of the ejector nozzle 431, and improves workability.

In the embodiments of the present invention, in the optical sorter in the first embodiment, the chute 3 is located with the lower end extended into the non-defective granular matter discharge channel 51 of the discharge hopper 5. In addition, the sorting and removal slit 32 is arranged to be located above the non-defective granular matter discharge channel 51. In addition, the ejector device 43 sorts and removes granular matters flowing down on the chute 3 to the defective granular matter discharge channel 52 via the sorting and removal slit 32. Thus, granular matters can be assorted and discharged easily and reliably to the non-defective granular matter discharge channel 51 and the defective granular matter discharge channel 52 of the discharge hopper 5.

### [Second embodiment]

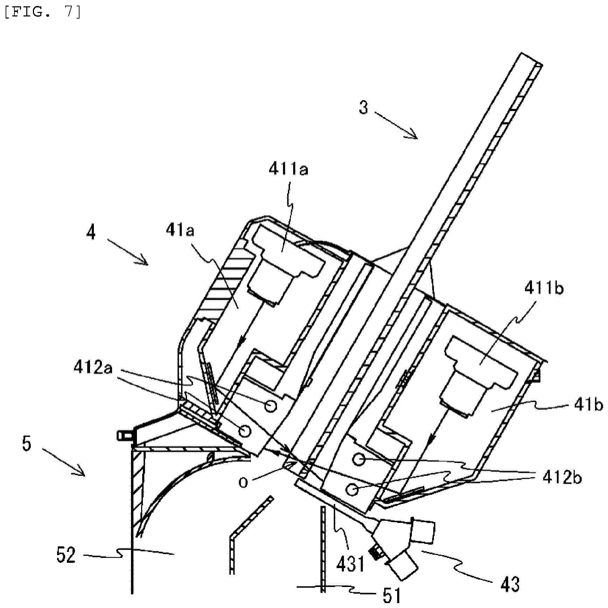

Figure 7 is a schematic explanatory diagram of an optical sorting unit in a second embodiment.

The optical sorting unit 4 in the second embodiment is common to the optical sorting unit in the first embodiment in that the chute 3 is provided with the optical detection slit 31 that orthogonally crosses the flowing down direction of granular matters and is continuously open in the width direction of the chute 3. The optical sorting unit 4 in the second embodiment differs from the optical sorting unit in the first embodiment in that the sorting and removal slit 32 is not provided on the downstream side of the optical detection slit 31.

In the optical sorting unit 4 in the second embodiment, the ejector device 43 has the leading end of the ejector nozzle 431 disposed on the lower surface side of the chute 3 at a position adjacent to the lower end of the chute 3. The ejector device 43 removes granular matters determined as defective granular matters among granular matters flowing down on the chute 3, which are granular matters at a moment of just falling down from the lower end of the chute 3, to the upper surface side of the chute 3 by ejecting air.

As understood from the drawings as well, the remaining components in the optical sorting unit 4 in the second embodiment are common to those of the optical sorting unit 4 in the first embodiment, and thus, description herein is omitted.

In the example shown in Figure 7, in the ejector device 43, the leading end of the ejector nozzle 431 is disposed on the lower surface side of the chute 3 at a position adjacent to the lower end of the chute 3, and defective granular matters at a moment of just falling down from the lower end of the chute 3 are removed to the upper surface side of the chute 3 by ejecting air. Alternatively, a suctioning device can also be used as the ejector device to suction and remove defective granular matters at a moment of falling down from the lower end of the chute 3 to the lower surface side of the chute 3.

In addition, by disposing the leading end of the ejector nozzle 431 on the upper surface side of the chute 3 at a position adjacent to the lower end of the chute 3 and at a height position at which the leading end does not interfere with granular matters falling down from the lower end of the chute 3, the ejector device 43 can also remove defective granular matters at a moment of falling down from the lower end of the chute 3 to the lower surface side of the chute 3 by ejecting air. Furthermore, a suctioning device can also be used as the ejector device to suction and remove defective granular matters at a moment of falling down from the lower end of the chute 3 to the upper surface side of the chute 3.

In the embodiments of the present invention, in the optical sorter in the second embodiment, the leading end of the ejector nozzle 431 is provided at the position adjacent to the lower end of the chute 3, and granular matters at a moment of falling down from the lower end of the chute 3 are sorted and removed to the upper surface side or the lower surface side of the chute 3. Thus, the falling trajectory of granular matters does not fluctuate at a position at which sorting is performed by the ejector device 43 unlike the conventional optical sorters.

Therefore, according to the optical sorter in the second embodiment, defective granular matters among granular matters can be sorted and removed with higher accuracy than in the conventional optical sorters, and sorting performance can thus be improved further.

In the example shown in Figure 7, in the ejector device 43, the leading end of the ejector nozzle 431 is disposed at the position adjacent to the lower end of the chute 3. By disposing the ejector nozzle 431 at a position opposite to the falling trajectory of granular matters falling down from the lower end of the chute 3 including the position adjacent to the lower end of the chute 3, defective granular matters falling down from the lower end of the chute 3 can be removed by ejecting air. In addition, a suctioning device can also be used as the ejector device 43 to suction and remove defective granular matters falling down from the lower end of the chute 3.

In the embodiments of the present invention, in the optical sorter in the second embodiment, the ejector nozzle 431 is provided at the position opposite to the falling trajectory of granular matters falling down from the lower end of the chute 3, and sorts and removes, from the falling trajectory, defective granular matters falling down from the lower end of the chute 3. In this case, since the ejector nozzle 431 can be disposed at a position in the vicinity of the lower end of the chute 3 unlike the conventional optical sorters, the falling trajectory of granular matters is less likely to fluctuate at a position at which sorting is performed by the ejector nozzle 431.

Therefore, according to the optical sorter in the second embodiment, defective granular matters among granular matters can be sorted and removed with higher accuracy than in the conventional optical sorters, and sorting performance can thus be improved further.

In an embodiment of the present invention described above, the optical sorting unit 4 removes defective granular matters, but granular matters can also be sorted into non-defective granular matters and defective granular matters by removing non-defective granular matters. In addition, the raw material and foreign matters can be sorted by removing the foreign matters mixed in the raw material.

In an embodiment of the present invention described above, the ejector device 43 is exemplified as one that has the ejector nozzle 431 and removes granular matters by ejecting air, but can also be implemented by one that removes granular matters by suction performed by a suctioning device, or one that removes granular matters by a mechanical operation.

Although embodiments of the present invention have been described above, the present invention is not limited to the above embodiments, but the configuration can be modified as appropriate within the scope of the invention.

### [Industrial Applicability]

Since the optical sorter of one embodiment of the present invention can detect defective granular matters, foreign matters, and the like among granular matters with high accuracy, sorting performance can be improved. In addition, since the optical sorter of one embodiment of the present invention can sort and remove defective granular matters, foreign matters, and the like among granular matters with high accuracy, sorting performance can be improved further.

### [Reference Signs List]

- 1: optical sorter
- 2: granular matter supply unit
- 21: vibrating feeder
- 3: chute
- 31: optical detection slit
- 32: sorting and removal slit
- 4: optical sorting unit
- 41a, 41b: optical detecting device
- 411a, 411b: imaging unit
- 412a, 412b: illuminating unit
- 42: determining device
- 43: ejector device
- 431: ejector nozzle
- 5: discharge hopper
- 51: non-defective granular matter discharge channel (first discharge part)
- 52: defective granular matter discharge channel (second discharge part)

## Claims

1. An optical sorter comprising:
a chute arranged in an inclined manner such that objects to be sorted flow down;
an optical detecting unit configured to detect the objects to be sorted at a detection position; and
an ejector unit configured to sort and remove the objects to be sorted based on a result of detection obtained by the optical detecting unit, wherein
the optical detecting unit includes
an illuminating unit configured to illuminate the detection position, and
an imaging unit configured to image the objects to be sorted at the detection position,
the chute is provided with an optical detection slit orthogonally crossing a flowing down direction of the objects to be sorted, and
the optical detecting unit images the objects to be sorted flowing down on the chute with the imaging unit using a position at which the optical detection slit is provided as the detection position.

2. The optical sorter according to claim 1, wherein a pair of the optical detecting units are provided on an upper surface side and a lower surface side of the chute, and image the objects to be sorted flowing down on the chute from the upper surface side and the lower surface side of the chute.

3. The optical sorter according to claim 1 or 2, wherein
the chute is provided with a sorting and removal slit orthogonally crossing the flowing down direction of the objects to be sorted on a downstream side of the optical detection slit, and
the ejector unit is disposed on a lower surface side of the chute, and removes the objects to be sorted flowing down on the chute by ejecting air to an upper surface side of the chute or by suction to the lower surface side of the chute via the sorting and removal slit.

4. The optical sorter according to claim 1 or 2, wherein
the chute is provided with a sorting and removal slit orthogonally crossing the flowing down direction of the objects to be sorted on a downstream side of the optical detection slit, and
the ejector unit is disposed on an upper surface side of the chute, and removes the objects to be sorted flowing down on the chute by suction to the upper surface side of the chute or by ejecting air to a lower surface side of the chute via the sorting and removal slit.

5. The optical sorter according to claim 3 or 4, further comprising
a discharge hopper configured to individually discharge the objects to be sorted having been sorted by the ejector unit, wherein
the chute is located with a lower end of the chute extended into a first discharge part of the discharge hopper, and the sorting and removal slit is arranged to be located above the first discharge part, and
the ejector unit sorts and removes the objects to be sorted flowing down on the chute to a second discharge part of the discharge hopper via the sorting and removal slit.

6. The optical sorter according to claim 1 or 2, wherein the ejector unit is provided at a position opposite to a falling trajectory of the objects to be sorted falling down from a lower end of the chute, and sorts and removes, from the falling trajectory, the objects to be sorted falling down from the lower end of the chute.

7. The optical sorter according to claim 6, wherein the ejector unit is provided at a position adjacent to the lower end of the chute on a lower surface side of the chute, and removes the objects to be sorted falling down from the lower end of the chute by ejecting air to an upper surface side of the chute or by suction to the lower surface side of the chute.

8. The optical sorter according to claim 6, wherein the ejector unit is provided at a position adjacent to the lower end of the chute on an upper surface side of the chute, and removes the objects to be sorted falling down from the lower end of the chute by suction to the upper surface side of the chute or by ejecting air to a lower surface side of the chute.
